# EUROPEAN PATENT APPLICATION

(11) **EP 3 628 710 A1**
(43) Date of publication of application: **01.04.2020**
(21) Application number: 18197025.2
(22) Date of filing: 26.09.2018
(51) Int. Cl.: C09D 161/00, C09D 161/20, C09D 171/02, C09D 7/40

(54) **COATING COMPOSITION**

(71) Applicant: Holland Novochem Technical Coatings B.V., 3994 DJ Houten (NL)
(72) Inventor: Maslow, Alexander, 7411 PT Deventer (NL); Bijpost, Erik Alexander, 3436 ZD Nieuwegein (NL); Maslow, Wasil, 7411 EK Deventer (NL)

(57) **Abstract**

The invention pertains to a coating composition comprising a first resin and a second resin and/or an adduct of a first resin and a second resin and a polymeric particle having an average particle size of less than 50 micron, wherein the second resin and/or an adduct of a first resin and a second resin is present in an amount of at least 20 wt%, based on the total weight of the composition.

## Description

The present invention relates to new coating compositions, coated substrates and processes for preparing the coated substrate.

Coating compositions comprising a first resin, e.g. a polyol, and an aminoplast have been described in WO 2016/155889, WO 01/55239, US 4,528,344, WO 2012/162298, US 4,154,891, GB 1 308 697 and WO 08/036629. In these publications, the aminoplast is predominantly used to cross-link the polyol, which may not lead to the optimal thermally cured coating composition. None of these references disclose coating compositions that are stable and lead to cured coating compositions with textured surfaces.

Matt coatings are usually established by adding matting agents, such as silica, barium sulphate, and talcum. Relatively large amounts of these matting agents (up to 15% m/m of the total resin mixture) have to be added to achieve the desired effect. A disadvantage of conventional matt coatings is their lack of stability and the observation that the presence of surfactants can diminish the matting effect of the cured coatings.

The objective of the present invention is to provide novel coating compositions.

The present invention pertains to a coating composition comprising a first resin and a second resin, preferably an aminoplast, and/or an adduct of a first resin and a second resin and a polymeric particle having an average particle size of less than 50 micron, wherein the second resin, preferably the aminoplast, and/or an adduct of a first resin and a second resin is present in an amount of at least 20 wt%, based on the total weight of the composition. The composition of the invention allows for polymeric particles to be present while not or not significantly compromising the properties of the coating composition. The inventive coating composition may even comprise polymeric particles that are capable of changing in size, e.g. Expancel® polymeric particles, before, during or after curing of the coating composition. Due to the presence of the polymeric particles, the cured coating exhibits a structured surface with novel light scattering effect, touch and feel and/or matting look. This matting effect can be achieved at lower dosage levels - sometimes between 10 to 20 times lower - compared to coatings with conventional matting agents like talcum or silica. Moreover, the coating composition of the invention is less affected by the presence of surface active agents and/or solvents, rendering the inventive coating compositions more versatile with an improved stability.

The coating composition of the invention is furthermore relatively simple compared to known compositions, and is therefore commercially and economically more attractive. The composition is generally easy to formulate. Moreover, the coating composition of the invention can be readily applied to substrate surfaces even at very high speeds using conventional coating devices. The inventive composition enables the formation of a cured coating that exhibits good retort-sterilisable properties, enhanced resistance towards chemicals, good adhesion to a wide variety of substrates, good abrasion resistance, and compatibility to a wide variety of inks. The color intensity of the inks may be improved allowing the use of a lower amount of ink. The coating composition of the invention generally has good leveling characteristics and leads to cured coatings with improved gloss and transparency. The coating composition further enables good coverage of tactile surfaces and structured surfaces such as coarse surfaces, and allows such structures to be present (touch and feel) after application of the (cured) coating composition of the invention. The use of expandable polymeric microspheres allows further formulation, texture and/or matting flexibility of the cured coating composition as the extent of expansion (and thus particle size) depends on the temperature chosen, the type of blowing agent, the type of polymer material and the curing temperature of the coating composition.

In the context of this application the term "functional group(s)" refers to the reactive group(s) taking part in the curing process. Examples of such functional groups of the first resin, preferably the polyol, include hydroxyl (-OH), carboxylic acid (-COOH), carboxylic ester (-COOR), linear carbonates (R-CO₃), cyclic carbonates, oxirane, oxetane, anhydrides (R-CO-O-CO-R'), and thiol (-SH). The functional groups in the first resin are referred to as "second functional groups".

Examples of functional groups for the second resin include, epoxide, peroxide (R-O-O-R'), isocyanate (R-NCO), amine (-NH₂), amide (-CO-NHR), ether (-R-O-R') and alcohol (-OH). R and R' represent substituents, which may be chosen as desired. When the second resin is an aminoplast, examples of functional groups for aminoplasts include amine (-NH₂), amide (-NHR), ether (-N-R-O-R') and alcohol (N-R-OH). R and R' represent substituents, which may be chosen as desired. The functional groups in the second resin and/or aminoplast are referred to as "first functional groups". Also other components of the coating composition of the invention may comprise functional groups capable of reacting with the first and/or second functional groups. Examples of such components include solvents and other resins. It is further noted that the first resin and/or the second resin, preferably the aminoplast, may further comprise non-reactive functional groups, like (non-reactive) ether groups or aliphatic hydrocarbon groups, that do not react with either the first resin and/or the second resin, preferably the aminoplast, but may contribute to improving the properties of the coating composition.

The molar ratio between the first and second functional groups is at least 0.01. Preferably, the ratio is at least 0.05, more preferably at least 0.1, even more preferably at least 0.2, even more preferably at least 0.5, and most preferably at least 1, and preferably at most 100, more preferably at most 75, even more preferably at most 50, and most preferably at most 40. When the molar ratio is at least 1, the ratio expresses an excess of the second resin, preferably the aminoplast, being present in the coating composition of the invention. This excess enables the second resin, preferably the aminoplast, to react with itself under curing conditions, and thus form a unique network of cured resin. It is noted that the second resin, preferably the aminoplast, tends to react more readily with the polyol than with itself. The skilled person will be able to determine the presence of such self-condensed second resin parts, preferably self-condensed aminoplast parts, by using conventional analytical techniques such as ¹H NMR, ¹³C NMR, ¹⁴N NMR, near infrared spectroscopy (NIR), FT infrared spectroscopy (FT-IR) and Raman spectroscopy. When a (much) lower ratio between the first and second functional groups is used, self-condensation of the second resin, preferably the aminoplast, will not proceed or proceed to a much lower extent. Molar ratios below 1 generally leads to different properties of the cured coating composition; for example when the polyol is a polyester the flexibility of the cured coating composition may exhibit a higher flexibility.

The first resin of the invention can be any resin known in the art that comprises the said second functional groups. The first resin is preferably a polyol. The polyol of the invention can be any polyol known in the art. The first resin, preferably the polyol, of the invention generally comprises at least one second functional group selected from the group consisting of hydroxyl (-OH), carboxylic ester (-COOR), carboxylic acid (-COOH), linear carbonates (R-CO₃), cyclic carbonates, oxirane, oxetane, anhydrides (R-CO-O-CO-R'), and thiol (-SH). Preferably, the second functional group is at least one selected from the group of hydroxyl (-OH), carboxylic ester (-COOR), and carboxylic acid (-COOH), more preferably selected from the group consisting of hydroxyl (-OH) and carboxylic acid (-COOH). When the second functional group is hydroxyl, the hydroxyl may be a primary, secondary or tertiary alcohol. Of these hydroxyl groups the primary alcohol is preferred. The substituents R and R' can be any suitable substituent known in the art, and include alkyl(ene), aryl(ene), and aralkyl(ene). The first resin, preferably the polyol, may have more than one functional group, e.g. the first resin, preferably the polyol, may contain both hydroxyl and carboxylic acids groups.

The first resin, preferably the polyol, may have an average functionality between 0.01 and 8. Preferably the average functionality is at most 5, more preferably at most 4 and even more preferably at most 3, and preferably at least 0.1, more preferably at least 0.5, even more preferably at least 1 and most preferably at least 2. In an embodiment of the invention, the first resin, preferably the polyol, comprises a second functional group being hydroxyl, and an average hydroxyl functionality between 2 and 8, preferably at most 5, more preferably at most 4 and even more preferably at most 3.

In the context of this application, the term "average functionality" or "average hydroxyl functionality" refers to the average number of functional groups or hydroxyl groups per monomer or monomeric unit in a resin.

The first resin, preferably the polyol, of the invention may be a monomer, an oligomer or polymer. In one embodiment, the first resin is preferably a monomer. Polymeric first resins, preferably polymeric polyols, may include polyesters, polyacrylates, and copolymers thereof. Of these polymeric polyols polyesters are preferred. Oligomers of the first resin refer to dimers, trimers and tetramers of the monomers of the first resin. Oligomeric polyols include dimers, trimers and tetramers of monomeric diols and/or triols. In one embodiment, the first resin may be modified by monomers, dimers or polymers having no functional groups. Modifications with monomers, dimers or polymers that are capable of hydrolyzing after curing are less preferred. Examples of suitable monomeric polyols comprising hydroxyl functional groups include 1,4-butanediol, 1,3-butanediol, 1,5-pentanediol, 1,6-hexanediol, 2,5-hexanediol, 2-methyl-1,3-pentanediol, 2-ethyl-1,3-hexanediol, 2,2-dimethyl-1,3-pentanediol, 1,4-cyclohexanediol, trimethylolethane, trimethylolpropane, pentaerythritol, dipentaerythritol, 1,4-cyclohexanedimethanol, 1,2-bis(hydroxymethyl)cyclohexane, 1,2-bis(hydroxyethyl)cyclohexane, trimethylolpropane, 2,2-dimethyl-3-hydroxypropyl-2,2-dimethyl-hydroxyproprionate, diethylene glycol, triethylene glycol, dipropylene glycol, tetraethylene glycol, trimethylolethane, glycerol, and sorbitol; and polyols comprising oxirane functional groups bisphenol A, bisphenol F, bisphenol S, alkoxylated bisphenol A such as ethoxylated bisphenol A and propoxylated bisphenol A and alkoxylated bisphenol F, such as ethoxylated bisphenol F and propoxylated bisphenol F; polyols comprising oxirane functional groups bisphenol A diglycidyl ether, 2,2'-bis(4-hydroxyphenyl)propane bis(2,3-epoxypropylether, bisphenol F diglycidyl ether, novolac glycidyl ether, ethoxylated bisphenol A and propoxylated bisphenol A. Of these polyol monomers the monomers comprising bisphenol A are preferred, in particular bisphenol A, the ethoxylated and/or propoxylated bisphenol A are preferred. It is contemplated that two or more first resins, preferably polyols, can be used in the coating compositions of the invention. When two or more first resins, preferably polyols, are present in the coating composition, the total number of second functional groups in the two or more first resins is used in the calculation of the molar ratio of first and second functional groups.

Examples of polyacrylate resins include polymers derived from one or more of acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, 3-hydroxypropyl methacrylate, hydroxystearyl acrylate and hydroxystearyl methacrylate. Copolymers of two or more of the aforementioned resins are also contemplated as long as the resulting resin contains reactive groups as is required by the invention.

The first resin, preferably the polyol, of the invention may preferably have a weight average molecular weight (Mw) of at most 100,000, more preferably at most 50,000, even more preferably at most 20,000 and most preferably at most 10,000, and preferably at least 200, more preferably at least 250 and most preferably at least 300. When the first resin, preferably a polyol, is a monomer, the first resin may preferably have a weight average molecular weight (Mw) of at most 10,000, more preferably at most 5,000, even more preferably at most 2,000 and most preferably at most 1,000, and preferably at least 200, more preferably at least 250 and most preferably at least 300.

The first resin, preferably the polyol, of the invention may preferably have a hydroxyl value of at least 50, more preferably at least 60, even more preferably at least 75, and most preferably least 100. The hydroxyl value of a first resin can be measured using standard methods, such as the method of ASTM E-222-76. In another preferred embodiment of the invention, the first resin has at least one second functional group per six monomeric units in the first resin, preferably at least one second functional group per three monomeric units, more preferably at least one second function group per monomeric unit. A higher functionality, in particular of hydroxyl groups, of the first resin generally leads to improved properties of the resulting cured coating. Such a high functionality generally does not undesirably impact the brittleness or reduce impact resistance of the cured coating composition.

The second resin may be any second resin known in the art. The second resin, preferably the aminoplast, of the invention may be a monomer, an oligomer or polymer. The second resin is preferably an aminoplast. The second resin, preferably the aminoplast, comprises at least one first functional group selected from the group consisting of epoxide, peroxide (R-O-O-R'), isocyanate (R-NCO), amine (-NH₂), amide (-CO-NHR), ether (-R-O-R') and alcohol (-OH). R and R' represent substituents, which may be chosen as desired. Preferably, the first functional group is at least one selected from the group of ether (-R-O-R'), isocyanate (R-NCO), amine (-NH₂), amide (-CO-NHR), and epoxide, more preferably selected from the group consisting of ether (-R-O-R'), isocyanate (R-NCO) and amine (-NH₂). When the second functional group is amine, the amine may be a primary, secondary or tertiary amine. Of these amine groups the primary amine is preferred. The substituents R and R' can be any suitable substituent known in the art, and include alkyl(ene), aryl(ene), and aralkyl(ene). The second resin, preferably the aminoplast, may have more than one functional group, e.g. the second resin, preferably the aminoplast, may contain both amine, ether and/or hydroxyl groups.

The second resin may have an average functionality between 0.1 and 8. Preferably the average functionality is at most 7, and most preferably at most 6, and preferably at least 1, more preferably at least 2, even more preferably at least 3 and most preferably at least 4.

The second resin of the invention may be a monomer, an oligomer or polymer. Examples of second resins include aminoplasts, phenol formaldehyde resins such as novolacs and resols, isocyanate-based resins such as toluene diisocyanate (TDI), methylene diphenyl diisocyanate (MDI), 1,6-hexamethylene diisocyanate (HMDI), isophorone diisocyanate (IPDI) and 4,4'-diisocyanato dicyclohexylmethane (H₁₂MDI); epoxides such as bisphenol A epoxy resins, bisphenol F epoxy resins, novolac epoxy resins, aliphatic epoxy resins, cycloaliphatic epoxy resins and glycidyl amine epoxy resins; and organic peroxides such as dicumyl peroxide, dibenzoyl peroxide, tert-amyl peroxy 2-ethyl hexyl carbonate and 2,2-di(tert-butylperoxy)butane.

In a preferred embodiment, the second resin is an aminoplast. The aminoplast of the invention can be any aminoplast known in the art. The aminoplast is generally a condensation product of an aldehyde and melamine, benzoguanamine, urea or similar compounds resulting in an amine resin or an amide resin. The aminoplast of the invention generally comprises first functional groups of which at least one is selected from the group consisting of amine (-NH₂), amide (-NHR), ether (-N-R-O-R') and alcohol (N-R-OH). Preferably, the second functional group is at least one selected from the group of amide (-NHR) and ether (-N-R-O-R'). The substituents R and R' can be any suitable substituent known in the art, and include alkyl(ene), aryl(ene), and aralkyl(ene). The aminoplast may have more than one functional group, e.g. the aminoplast may contain both ether and alcohol groups.

The aminoplast may have an average functionality between 2 and 8. Preferably the average functionality is at most 7, and most preferably at most 6, and preferably at least 3 and most preferably at least 4.

The aminoplast of the invention may be a monomer, an oligomer or polymer. Polymeric aminoplasts may include melamine resin, dicyanimide resin, glycoluril resins, urea resins and copolymers thereof. Of these polymeric aminoplasts melamine resins are preferred. Oligomeric aminoplasts include dimers, trimers and tetramers of monomeric aminoplasts. Examples of suitable monomeric aminoplasts include condensation products of an aldehyde and methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine. Of these aminoplasts aldehyde condensation products with melamine are preferred. Suitable aldehydes include formaldehyde, acetaldehyde, crotonaldehyde, acrolein, benzaldehyde, and furfural. Formaldehyde is the preferred aldehyde. Further modification of the aminoplasts are also considered, including etherification with a monoalcohol, such as methanol, ethanol, propanol, butanol, pentanol, hexanol and heptanol. Examples of such aminoplasts include hexamethoxymethyl melamine (Cymel 300 and Cymel 303), butylated melamine formaldehyde resin (Cymel 1156 and Cymel 1158 and Cymel MB-14), and partially butylated, methylated melamine formaldehyde resin (Cymel 1130) and butoxylated glycoluril formaldehyde resin, such as Cymel 1170. Of these hexamethoxymethyl melamine is preferred. Further examples of aminoplasts include derivatives of methylurea, glycoluril, benzourea, dicyandiamide, formaguanamine, acetoguanamine, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 2,4,6-triethyl-triamino-1,3,5-triazine, 1,3,5-triaminobenzene and melamine, wherein the derivative comprises functional groups selected from the group consisting of vinyl, oxetane, carboxylic acid, hydroxyl and thiol. Examples of such derivatives include derivative of glycoluril such as TA-G, TG-G, TC-G, TH-G and TS-G. The invention also contemplates using two or more of such aminoplasts. When two or more aminoplasts are present in the coating composition, the total number of first functional groups in the two or more aminoplasts is used in the calculation of the molar ratio of first and second functional groups.

The aminoplast of the invention may preferably have a weight average molecular weight (Mw) of at most 5,000, more preferably at most 2,000, even more preferably at most 1,000 and most preferably below 600, and preferably at least 200, more preferably at least 250 and most preferably at least 300.

The invention further pertains to coating compositions comprising an adduct of the first resin and the aminoplast. In the context of this application the wording "adduct" refers to reaction products of a first resin and an aminoplast, preferably of monomers of a first resin and an aminoplast, wherein the resulting adduct maintains at least two functional groups enabling polymerization and/or cross-linking of the adduct. It is contemplated that the coating composition comprises the adduct alone, and also combinations of adduct and first resin, combinations of adduct and aminoplast, and combinations of adduct, first resin and aminoplast. Examples of such adducts include reaction products of the monomers of the first resin, preferably the polyol, and the aminoplast as described above. Such adducts are typically formed under conditions where only the adduct is formed and no or only to a small extent polymerization and/or cross-linking occurs. The coating composition of the invention preferably comprises adducts of the first resin and the aminoplast, wherein the amount of polymerized and/or cross-linked product is at most 5 wt%, based on the total weight of aminoplast and first resin. Preferably, the polymerized and/or cross-linked product of the aminoplast and first resin is present in an amount of at most 2 wt%, more preferably at most 1 wt%, even more preferably at most 0.5 wt%. Even more preferably, the coating composition is substantially free from polymerized and/or cross-linked product, and most preferably the coating composition is completely free from polymerized and/or cross-linked product. The term "substantially free" means that less than 100 parts per million of the polymerized and/or cross-linked product is present in the coating composition. The term "completely free" means that the cured coating contains less than 20 parts per billion (ppb) of polymerized and/or cross-linked product.

The functional groups of the adduct may be the functional groups derived from the first resin, preferably the polyol, and/or from the aminoplast. The molar ratio of functional groups in adducts should be considered as the molar ratio of the second functional groups of the first resin and of the first functional groups of the monomeric aminoplast, preferably the monomeric aminoplast, as present in the first resin per se and the aminoplast per se (thus prior to reacting to the adduct). The molar ratio of the second functional groups of the first resin of the adduct, preferably the monomeric first resin, and the aminoplast of the adduct, preferably the monomeric aminoplast, is at least 0.01. Preferably, the ratio is at least 0.05, more preferably at least 0.1, even more preferably at least 0.2, even more preferably at least 0.5, and most preferably at least 1, and preferably at most 100, more preferably at most 75, even more preferably at most 50, and most preferably at most 40.

In one embodiment of the invention, the coating composition comprises the second resin, preferably the aminoplast, in an amount of at least 20 % by weight (wt%), based on the total weight of the first resin and the second resin, preferably the aminoplast. Preferably, the second resin, preferably the aminoplast, is present in an amount of at least 25 wt%, more preferably at least 30 wt%, even more preferably at least 40 wt% and most preferably at least 50 wt%, and preferably at most 99 wt%, more preferably at most 95 wt%, even more preferably at most 90 wt% and most preferably at most 85 wt%, based on the total weight of the first resin and the second resin, preferably the aminoplast.

The coating composition of the invention comprises the first resin in an amount of at most 80 % by weight (wt%), based on the total weight of the first resin and the second resin, preferably the aminoplast. Preferably, the first resin is present in an amount of at most 75 wt%, more preferably at most 70 wt%, even more preferably at most 60 wt% and most preferably at most 50 wt%, and preferably at least 1 wt%, more preferably at least 5 wt%, even more preferably at least 10 wt% and most preferably at least 15 wt%, based on the total weight of the first resin and the second resin, preferably the aminoplast.

In one embodiment of the invention, the coating composition comprises the second resin, preferably the aminoplast in an amount of at least 20 % by weight (wt%), based on the total weight of solids in the coating composition. Preferably, the second resin, preferably the aminoplast is present in an amount of at least 25 wt%, more preferably at least 30 wt%, even more preferably at least 40 wt% and most preferably at least 50 wt%, and preferably at most 99 wt%, more preferably at most 95 wt%, even more preferably at most 90 wt% and most preferably at most 85 wt%, based on the total weight of solids in the coating composition.

The coating composition of the invention comprises the first resin in an amount of at most 80 % by weight (wt%), based on the total weight of solids in the coating composition. Preferably, the first resin is present in an amount of at most 75 wt%, more preferably at most 70 wt%, even more preferably at most 60 wt% and most preferably at most 50 wt%, and preferably at least 1 wt%, more preferably at least 5 wt%, even more preferably at least 10 wt% and most preferably at least 15 wt%, based on the total weight of solids in the coating composition.

In the case that the first resin is a polyol and the second resin is an aminoplast, the coating composition of the invention comprises the polyol in an amount of at most 80 % by weight (wt%), based on the total weight of the polyol and the aminoplast. Preferably, the first resin is present in an amount of at most 75 wt%, more preferably at most 70 wt%, even more preferably at most 60 wt% and most preferably at most 50 wt%, and preferably at least 1 wt%, more preferably at least 5 wt%, even more preferably at least 10 wt% and most preferably at least 15 wt%, based on the total weight of the polyol and the aminoplast.

In the case that the first resin is a polyol and the second resin is an aminoplast, the coating composition of the invention comprises the polyol in an amount of at most 80 % by weight (wt%), based on the total weight of solids in the coating composition. Preferably, the polyol is present in an amount of at most 75 wt%, more preferably at most 70 wt%, even more preferably at most 60 wt% and most preferably at most 50 wt%, and preferably at least 1 wt%, more preferably at least 5 wt%, even more preferably at least 10 wt% and most preferably at least 15 wt%, based on the total weight of solids in the coating composition.

In another embodiment of the invention, the coating composition comprises solids in an amount of at least 20 % by weight (wt%), based on the total weight of the coating composition. Preferably, the solids are present in an amount of at least 25 wt%, more preferably at least 30 wt%, even more preferably at least 35 wt% and most preferably at least 40 wt%, and preferably at most 95 wt%, more preferably at most 90 wt%, even more preferably at most 80 wt% and most preferably at most 75 wt%, based on the total weight of the coating composition. The term "solids" is known to the man skilled in the art, and generally refers to the solid or non-volatile material in the coating composition; typically the solids include the resins, pigments, dyes, catalyst, etc. and does not include solvents that evaporate during the curing process. The amount of solids may also be referred to as "solids content".

The coating composition of the invention further comprises polymeric particles. The polymeric particles can be any polymeric particles known in the art. The polymeric particles of the invention can have any shape, e.g. spherical, cubic, cylindrical and rod-shaped. The polymer in the polymeric particles of the invention is generally a thermoplastic polymer. Examples of thermoplastic polymers include polyethylene, polypropylene, grafted polyolefins, and polystyrene; acetal (co)polymers, such as polyoxymethylene (POM); rubbers, such as natural rubber (NR), styrene-butadiene rubber (SBR), polyisoprene (IR), polybutadiene (BR), polyisobutylene (IIR), halogenated polyisobutylene, butadiene nitrile rubber (NBR), hydrogenated butadiene nitril (HNBR), styrene-isoprene-styrene (SIS) and similar styrenic block copolymers, poly(epichlorohydrin) rubbers (CO, ECO, GPO), silicon rubbers (Q), chloroprene rubber (CR), ethylene propylene rubber (EPM), ethylene propylene diene rubber (EPDM), polysulfide rubber (T), fluorine rubbers (FKM), ethane-vinylacetate rubber (EVA), polyacrylic rubbers (ACM), polynorbornene (PNR); polyurethanes (AU/EU) and polyester/ether thermoplastic elastomers.

Particularly preferred are polymers or copolymers obtained by polymerization of at least one ethylenically unsaturated monomer. Such polymers include polyolefins and modified polyolefins, which are known to the man skilled-in-the-art. The polyolefin or modified polyolefin can be a homopolymer or a copolymer, terpolymer of grafted polymer. Examples of such (modified) polyolefins include polyethylene, polypropylene, polybutylene, polystyrene, polyvinyl chloride, polyvinylidene chloride and ethylene-propylene rubber, propylene-butene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, maleic anhydride-grafted polyolefin, maleic acid-grafted polyolefin, and mixtures thereof. More preferred polyolefins are polyethylene, polypropylene, polystyrene and polyvinyl chloride.

Suitable examples of polyethylene are high-density polyethylene (HDPE), low-density polyethylene (LDPE), straight chain low-density polyethylene (LLDPE), ultra-low density polyethylene and ultra-high molecular weight polyethylene. Further examples of ethylene-based copolymers include ethylene-vinyl acetate copolymer (EVA), ethylene-ethyl acetate copolymer (EEA), ethylene-methyl acrylate copolymer (EMA) and ethylene-acrylic acid copolymer (EAA).

Preferred polyolefins are polyethylene and polypropylene, which include emulsions and dispersions thereof. Such emulsions and dispersions can be water-based or solvent-based. Examples of such polyolefin dispersions or emulsions include Mitsui Unisol R100 G, Mitsui XP04A, Mitsui S300, Mitsui Chemipearl W900 and Dow Canvera 1110.

In one embodiment of the invention, the composition comprises the polymer (or polymeric particles) in an amount of at least 0.01 % by weight (wt%), based on the total weight of composition. Preferably, the polymer is present in an amount of at least 0.02 wt%, more preferably at least 0.05 wt%, even more preferably at least 0.1 wt% and most preferably at least 0.5 wt%, and preferably at most 15 wt%, more preferably at most 10 wt%, even more preferably at most 9 wt%, even more preferably at most 8 wt%, even more preferably at most 7 wt%, and most preferably at most 5 wt%, based on the total weight of the composition.

In one embodiment, the polymer particles have an average particle size of at most 50 micron (or µm). Preferably, the polymer particles have an average particle size of at most 30 µm, preferably at most 20 µm, and most preferably at most 10 µm, and at least 10 nm, preferably at least 20 nm, more preferably at least 50 nm and most preferably at least 100 nm.

Preferably, the polymer particles have a d90 value of at most 50 µm, preferably at most 30 µm, more preferably at most 20 µm, and most preferably at most 10 µm, and at least 10 nm, preferably at least 20 nm, more preferably at least 50 nm and most preferably at least 100 nm.

In one embodiment of the invention, the solid particles have a d99 value of at most 50 µm, preferably at most 30 µm, more preferably at most 20 µm, and most preferably at most 10 µm, and at least 10 nm, preferably at least 20 nm, more preferably at least 50 nm and most preferably at least 100 nm. The average particle size, d90 and d99 values can be measured using conventional techniques, e.g. light scattering techniques. When the thermally expandable thermoplastic microspheres are used (vide supra), the average particle size, d99 value and d90 value is taken before the microspheres expanded. Upon expansion, the average particle size, d99 value and d90 value of the expanded microspheres may increase at least twice, preferably at least 3 times, more preferably at least 5 times, and generally at most 100 times, preferably at most 50 times, and most preferably at most 20 times its original size (before expansion). Such expansion may occur before, during or after curing of the coating composition of the invention.

In applications wherein the coating thickness is relatively thin, e.g. in (external) can coatings, the solid particles generally have an average particle size, d99 value and/or d90 value of at most 30 µm, preferably at most 20 µm, more preferably at most 10 µm and most preferably at most 5 µm. The lower limits are the same as described before.

In a preferred embodiment, the polymeric particles are thermally expandable thermoplastic microspheres (also referred to as "thermoplastic microspheres"). The thermally expandable thermoplastic microspheres can be any such microspheres known in the art, e.g. those marketed by AkzoNobel under the trademark Expancel®. Thermally expandable thermoplastic microspheres and their manufacture are disclosed in, for example, US 3,615,972, US 3,945,956, US 4,287,308, US 5,536,756, US 6, 235,800, US 6,235,394, US 6,509,384, US 6,617,363, US 6,984,347, US 2004/0176486, EP 4 860 080, EP 566 367, EP 1 067 151, EP 1 230 975, EP 1 288 272, EP 1 598 405, EP 1 811 007, EP 1 964 903, WO 2002/096635, WO 2004/072160, WO 2007/091960, WO 2007/091961, WO 2007/091961, WO 2007/142593, JP 1987-286534 and JP 2005-272633, which are herein incorporated by reference. The thermally expandable thermoplastic microspheres of the invention generally comprise a thermoplastic polymer shell and a blowing agent. Typically, the blowing agent is contained in the thermoplastic polymer shell. The advantage of using thermally expandable thermoplastic microspheres in the coating composition of the invention is that a lower amount of microspheres can be used compared to conventional polymer particles. These particles also have the advantage that the cured coating is generally flexible and does not break upon bending and/or reduce the productivity in a can coating product line as opposed to and in comparison with solid thermoplastic particles of the same size. Moreover, the coating compositions generally have a lower density than conventional coating compositions, and consequently the applied coating composition may have a lower overall weight. A further advantage is that expandable thermoplastic microspheres have an initial average particle size rendering the coating composition to be more easily applied to substrate surfaces, while after a curing process the microspheres are expanded to a (much) larger size giving the cured coating a considerably improved matting and/or touch and feel effect.

The thermoplastic polymer shell can be made from polymers and co-polymers by polymerizing various ethylenically unsaturated monomers. The ethylenically unsaturated monomers can be nitrile-containing monomers, such as acrylonitrile, methacrylonitrile, alpha-chloroacrylonitrile, alpha-ethoxyacrylonitrile, fumaronitrile and crotonitrile; acrylic esters such as methylacrylate and ethyl acrylate; methacrylic esters such as methyl methacrylate and ethyl methacrylate; vinyl halides such as vinyl choride; vinylidene halides such as vinylidene chloride; vinyl pyridine; vinyl esters such as vinyl acetate; styrene, optionally substituted, such as styrene, halogenated styrene and alpha-methyl styrene; dienes such as butadiene, isoprene and chloroprene; and any mixtures thereof.

The ethylenically unsaturated monomers may also comprise cross-linking multifunctional monomers. The crosslinking multifunctional monomers include any one of divinyl benzene, ethylene glycol di(meth)acrylate, diethylene glycol di(meth)acrylate, triethylene glycol di(meth)acrylate, propylene glycol di(meth)acrylate, 1,4-butanediol di(meth)acrylate, 1,6-hexanediol di(meth)acrylate, 1,3-butanediol di(meth)acrylate, neopentyl glycol di(meth)acrylate, 1,10-decanediol di(meth)acrylate, pentaerytritol tri(meth)acrylate, pentaerythritol tetra(meth)acrylate, pentaerythritol hexa(meth)acrylate, dimethylol tricyclodecane di(meth)acrylate, triallylformal tri(meth)acrylate, allyl methacrylate, trimethylol propane tri(meth)acrylate, trimethylol propane triacrylate, tributanediol di(meth)acrylate, PEG 200 di(meth)acrylate, PEG 400 di(meth)acrylate, PEG 600 di(meth)acrylate, 3-acryloyloxyglycol monoacrylate, triacyl formal or triallyl isocyanate, triallyl isocyanurate or mixtures of two or more monomers.

The cross-linking multifunctional monomer makes up at least 0.01 wt% of the total weight of ethylenically unsaturated monomers of the thermoplastic polymer shell. Preferably, the cross-linking multifunctional monomer is present in an amount of at least 0.05 wt%, more preferably at least 0.1 wt%, even more preferably at least 0.2 wt% and most preferably at least 0.5 wt%, and preferably at most 2 wt%, more preferably at most 1.5 wt%, even more preferably at most 1.2 wt%, even more preferably at most 1 wt%, and most preferably at most 0.8 wt%, based on the total weight of ethylenically unsaturated monomers of the thermoplastic polymer shell.

In one embodiment of the invention, the thermally expandable thermoplastic microsphere comprises the thermoplastic polymer in an amount of at least 50 % by weight (wt%), based on the total weight of the thermally expandable thermoplastic microspheres. Preferably, the polymer is present in an amount of at least 55 wt%, more preferably at least 60 wt%, even more preferably at least 65 wt% and most preferably at least 70 wt%, and preferably at most 99 wt%, more preferably at most 95 wt%, even more preferably at most 90 wt%, even more preferably at most 85 wt%, even more preferably at most 80 wt%, and most preferably at most 75 wt%, based on the total weight of the thermally expandable thermoplastic microspheres.

In one embodiment, the thermoplastic polymer generally has a glass temperature above room temperature. Preferably, the glass temperature is at least 50°C, more preferably at least 60°C, more preferably at least 70°C and most preferably at least 80°C, and generally at most 250°C, preferably at most 230°C, more preferably at most 220°C, even more preferably at most 210°C and most preferably at most 200°C.

The blowing agent in the thermally expandable thermoplastic microspheres can be any blowing agent known in the art that can be suitably used in thermally expandable thermoplastic microspheres. Typically, such blowing agents are liquid at ambient conditions. Preferably, the boiling point of the blowing agent is below the glass transition temperature of the thermoplastic polymer shell. Examples of such blowing agents include alkanes such as n-pentane, isopentane, neopentane, butane, isobutane, cyclohexane, hexane, isohexane, neohexane, heptane, isoheptane, octane, petroleum ether, isododecane and isooctane; halogenated alkanes and alkenes such as methyl chloride, methylene chloride, dichloroethane, dichloro ethylene, trichloro ethane, trichloro ethylene and trichlorofluoro methane. Preferably, the blowing agent is an alkane. More preferably, the blowing agent is at least one alkane selected from the group consisting of isobutane, isopentane, isohexane, cyclohexane, isooctane and isododecane. Most preferably, the blowing agent is isobutane or isopentane.

In one embodiment of the invention, the thermally expandable thermoplastic microsphere comprises the blowing agent in an amount of at most 50 % by weight (wt%), based on the total weight of the thermally expandable thermoplastic microspheres. Preferably, the polymer is present in an amount of at least 1 wt%, more preferably at least 5 wt%, even more preferably at least 10 wt%, even more preferably at least 15 wt%, even more preferably at least 20 wt% and most preferably at least 25 wt%, and preferably at most 45 wt%, more preferably at most 40 wt%, even more preferably at most 35 wt%, and most preferably at most 30 wt%, based on the total weight of the thermally expandable thermoplastic microspheres.

The temperature at which the thermally expandable thermoplastic microspheres begin expanding depends on the type and combination of the thermoplastic polymer shell and the blowing agent.

The amount of the thermally expandable thermoplastic microspheres used in the composition of the invention is similar to the amounts mentioned above for the polymer or polymer particles.

The remaining part of the coating composition may be comprised of other components commonly used in coating compositions. With the first resin, the aminoplast and the polymeric particles the other components add up to 100 wt% of the total weight of the coating composition.

In an embodiment of the invention, the coating composition of the invention can be further diluted by a solvent to obtain a solids content below 40 wt%. For certain applications, such as the application of extremely thin coating layers, this may be warranted. In such case, the solids content in the coating composition of the invention may be preferably at most 35 wt%, more preferably at most 30 wt% and most preferably at most 25 wt%, and preferably at least 1 wt%, more preferably at least 2 wt%, even more preferably at least 5 wt%, and most preferably at least 10 wt%.

Alternatively, the coating compositions with the higher solids content (above 50 wt%) may be diluted with a suitable solvent, and optionally additives, just prior to application to a substrate. The dilution level may be used as desired, and the skilled person is well capable of diluting in an appropriate manner.

The coating composition of the invention may further comprise a solvent. The solvent may be any suitable solvent known in the art. Preferred solvents are reactive solvents that comprise a functional group capable of reacting with the first resin. The functional group may be hydroxyl, amine or thiol. Preferably, the functional group is a hydroxyl or an amine. Examples of reactive solvents include alcohols, such as methanol, ethanol, diethanol, amino ethanol, glycol, n-propanol, iso-propanol and ethanethiol, ethylene glycol, propylene glycol and neopentyl glycol; and amines, such as methyl amine, ethanol amine, dimethyl amine, methyl ethanol amine, diphenyl amine, trimethyl amine, triphenyl amine and piperidine; and acrylates such as acrylate, methacrylate, ethyl acrylate, 2-chloroethyl vinyl ether, 2-ethylhexyl acrylate, 2-hydroxyethyl methacrylate, butyl acrylate, butyl methacrylate, 2-hydroxypropyl methacrylate, 3-hydroxypropyl methacrylate, 2-hydroxypropyl methacrylate, and 3-hydroxypropyl methacrylate; and water.

In a further embodiment of the invention, the coating composition further comprises a lactam and/or lactam adduct, and optionally water. The lactam of the invention is well known in the art and refers to a cyclic amide. Examples of lactams include β-lactam, γ-lactam, δ-lactam and ε-lactam. The lactam may be substituted, e.g. with C₁-C₄ alkyl or vinyl, or unsubstituted. Unsubstituted lactams are preferred. Examples of unsubstituted lactams include 2-azetidinone, γ-butyrolactam, 2-piperidinone and ε-caprolactam. Preferably, the lactam is selected from γ-butyrolactam and ε-caprolactam. Most preferably, the lactam is ε-caprolactam.

The lactam adduct of the invention may be adducts or condensation products of the aforementioned lactams with an aldehyde. The aldehyde suitable for the inventive adducts generally are capable of reacting with a carbon and/or nitrogen present in the cyclic ring of the lactam. Substitution at the carbon, preferably α substitution, is preferred when the reaction is performed under alkaline conditions. The reaction at the carbon, preferably α substitution, is preferred. Suitable aldehydes include formaldehyde, acetaldehyde, crotonaldehyde, acrolein, benzaldehyde, and furfural. Formaldehyde is the preferred aldehyde. Also lactam adducts comprising two or more lactams are contemplated. Moreover, lactam adducts comprising two or more aldehydes are contemplated, as well as adducts comprising two or more lactams and two or more aldehydes are contemplated. The adduct may comprise two, three, four or more (cyclic) lactams which are separated by a linker which is formed by the aldehyde. The lactam adduct of the invention maintains the amide functional groups in each cyclic ring.

In one embodiment of the invention, the lactam adduct may be formed by reacting a lactam, an aldehyde and a first resin and/or aminoplast capable of reacting with the aldehyde. Preferably, the first resin and/or aminoplast is a monomer and/or an oligomer. Most preferably, the first resin and/or aminoplast is a monomer. In another embodiment, the lactam adduct may be formed by reacting a lactam and a first resin and/or aminoplast capable of reacting with the lactam. Suitable examples of such first resins are polyols.

Preferably, the lactam and/or lactam adduct of the invention are lactam and a lactam adduct of lactam and an aldehyde, preferably the lactam adduct which is substituted at the C carbon of the lactam. Of these, lactam is more preferred. Even more preferably, the lactam is selected from γ-butyrolactam and ε-caprolactam. Most preferably, the lactam is ε-caprolactam.

The coating compositions of the invention comprising a lactam and/or lactam adduct generally have a lower viscosity, show an improved compatibility and a more stable coating composition. This is particularly of interest for the coating compositions of the present invention which comprise the polymer particles, in particular the thermally expandable thermoplastic microspheres, which may alter the rheological properties disadvantageously and/or may not be stably included in the composition, e.g. phase segregation occurs. Addition of the lactam and/or lactam adduct overcomes these issues. A wider range of first resins and second resins, preferably aminoplast resins, can be used, and a higher solid content is allowed. As the lactams and/or lactam adduct generally do not contribute to the VOC level, the coating composition when comprising lactam and/or lactam adduct and optionally water may result in an amount of VOC of 0 g/l. It is further noted that the lactam and/or lactam adduct, in particular ε-caprolactam, are generally food approved and lowly toxic.

In one embodiment of the invention, the coating composition further comprises water as solvent, in particular as the reactive solvent. Combinations of water and the lactam and/or lactam adduct of the invention have been particularly interesting for its ability to compatibilize a wider range of first resins, also the ones that are quite hydrophobic (i.e. not miscible with or dissolvable in water). In one embodiment, the weight ratio of water and the lactam and/or lactam adduct is at least 0.001, preferably at least 0.01, more preferably at least 0.1, even more preferably at least 0.2 and most preferably at least 0.5, and generally at most 1000, preferably at most 100, more preferably at most 10, even more preferably at most 5, and most preferably at most 3.

Examples of non-reactive solvents include Solvent Naphtha®, heavy benzene, various Solvesso® grades, various Shellsol® grades and Deasol®, various white spirits, mineral turpentine oil, tetralin, decalin, methyl ethyl ketone, acetone and methyl n-propyl ketone. Non-reactive solvents that are incorporated at least partially and preferably completely, into the cured resin are preferred. Preferably, the non-reactive solvent has a boiling point above the curing temperature, preferably above 250 °C. The coating composition of the invention may comprise a reactive solvent and a non-reactive solvent, a combination of two or more solvents, or a combination of two or more reactive solvents. Coating compositions comprising a reactive solvent and/or water are preferred.

The coating composition of the invention may comprise the non-reactive solvent and/or the reactive solvent in an amount of at most 30 % by weight (wt%), based on the total weight of the coating composition. Preferably, the non-reactive solvent and/or the reactive solvent is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

In a further embodiment, the coating composition of the invention may comprise lactam and/or adduct of lactam in an amount of at most 85 % by weight (wt%), based on the total weight of the coating composition. Preferably, the lactam and/or adduct of lactam is present in an amount of at most 70 wt%, more preferably at most 60 wt%, even more preferably at most 50 wt%, even more preferably at most 40 wt% and most preferably at most 30 wt%, and preferably at least 1 wt%, more preferably at least 2 wt%, even more preferably at least 5 wt% and most preferably at least 10 wt%, based on the total weight of the coating composition.

In a further embodiment, the coating composition of the invention may comprise water in an amount of at most 85 % by weight (wt%), based on the total weight of the coating composition. Preferably, the water is present in an amount of at most 70 wt%, more preferably at most 60 wt%, even more preferably at most 50 wt%, even more preferably at most 40 wt% and most preferably at most 30 wt%, and preferably at least 1 wt%, more preferably at least 2 wt%, even more preferably at least 5 wt% and most preferably at least 10 wt%, based on the total weight of the coating composition.

The coating composition may further comprise additives commonly used in coating compositions including pigments and dyes, surfactants, flow controlling agents, thixotropic agents, anti-gassing agents, ultraviolet light stabilizers, adhesion enhancing promoters, waxes, filling agents, matting agents, defoamers and curing catalysts. The additives can be any additive known in the art. Examples of pigments and dyes include metal oxides like titanium dioxide, iron oxide, zinc oxide and chromium oxide; metal hydroxides; metal sulfides, metal sulfates, metal carbonates such as calcium carbonate; carbon black, china clay, phthalo blues and greens, organo reds and other organic dyes. The coating compositions of the invention may increase the color intensity of the pigments and dyes. This may lead to a reduction in the total amount of pigment and/or dye used. The curing catalyst is preferably a strong acid. Examples of suitable curing catalysts include p-toluenesulfonic acid, xylenesulfonic acid, dodecyl benzene sulfonic acid, dinonyl naphthalene sulfonic acid, dinonyl naphthalene disulfonic acid, fluorosulfuric acid, trifuoromethane sulfonic acid, hexafluoro antimonate compounds and catalysts derived thereof, phosphoric acid and sulfuric acid. Examples of ultraviolet light stabilizers include benzophenone, such as hydroxydodecyl benzophenone, 2,4-dihydroxy-3',5'-di-t-butylbenzophenone, 2-hydroxy-4-acryloxyethoxybenzophenone and 2-hydroxy-4-methoxy-2'-carboxybenzophenone.

The coating composition of the invention may comprise the additives in an amount of at most 30 % by weight (wt%), based on the total weight of the coating composition. Preferably, the additive is present in an amount of at most 25 wt%, more preferably at most 20 wt%, even more preferably at most 15 wt% and most preferably at most 30 wt%, and preferably at least 1 wt%, more preferably at least 2 wt%, even more preferably at least 5 wt% and most preferably at least 10 wt%, based on the total weight of the coating composition.

The invention further pertains to a process for preparing a coated substrate comprising the steps of: (a) applying the coating composition according to the invention to a substrate; and (b) curing the coating composition. The process may further comprise the step of shaping the coated substrate to a food or beverage container.

The invention also pertains to a coated substrate coated substrate comprising a substrate and a cured coating composition applied to at least part of the substrate, the coating composition being in accordance with the invention. In an embodiment of the invention the coated substrate is a food or beverage container. The cured coating composition has all the advantages as described above for the cured coating composition. A further advantage of the cured coating composition is that the volatile organic compounds (VOC) level is generally very low. The VOC level is typically determined using standard method ASTM D3960-05(2013). The amount of VOC in the coating composition of the invention is generally at most 100 g/l, preferably at most 75 g/l, more preferably at most 50 g/l, even more preferably at most 30 g/l, even more preferably at most 20 g/l, even more preferably at most 10 g/l, even more preferably at most 5 g/l and most preferably at most 1 g/l. As the lactams and/or lactam adduct generally do not contribute to the VOC level, the coating composition when comprising lactam and/or lactam adduct and optionally water may result in an amount of VOC of 0 g/l.

The cured coating composition generally comprises polymeric particles have an average particle size of at most 50 micron (or µm). Preferably, the polymer particles have an average particle size of at most 30 µm, preferably at most 20 µm, and most preferably at most 10 µm, and at least 10 nm, preferably at least 20 nm, more preferably at least 50 nm and most preferably at least 100 nm.

Preferably, the polymer particles have a d90 value of at most 50 µm, preferably at most 30 µm, more preferably at most 20 µm, and most preferably at most 10 µm, and at least 10 nm, preferably at least 20 nm, more preferably at least 50 nm and most preferably at least 100 nm.

In one embodiment of the invention, the solid particles have a d99 value of at most 50 µm, preferably at most 30 µm, more preferably at most 20 µm, and most preferably at most 10 µm, and at least 10 nm, preferably at least 20 nm, more preferably at least 50 nm and most preferably at least 100 nm. The average particle size, d90 and d99 values can be measured using conventional techniques, e.g. light scattering techniques.

In applications wherein the coating thickness is relatively thin, e.g. in (external) can coatings, the solid particles generally have an average particle size, d99 value and/or d90 value of at most 30 µm, preferably at most 20 µm, more preferably at most 10 µm and most preferably at most 5 µm. The lower limits are the same as described before.

The substrate of the invention can be any substrate known in the art. The substrate may be porous or non-porous. Examples of suitable substrates include metals, such as aluminum, aluminum alloys, steel, steel alloys, tin, tin alloys, zinc, zinc alloys, chrome and chrome alloys; glass such as fused silica glass, aluminosilicate glass, soda-lime-silica glass, borosilicate glass and lead-oxide glass; ceramics, such as porcelain, bone china, alumina, ceria, zirconia, carbides, borides, nitrides and silicides; plastic such as functionalized polyethylene (PE), functionalized polypropylene (PP), polyethylene terephthalate (PET), polyvinyl chloride (PVC) and nylons; and wood. Preferably, the substrate is metal, in particular aluminum.

In the context of the present application the term "cure" or "cured" refers to the process of hardening of the coating composition by polymerization and/or crosslinking. This curing process can be initiated by exposure to ultraviolet radiation, heat, such as by infrared radiation, by microwave radiation or by heating, e.g. in an oven, electron beams and chemical additives. The coating compositions of the invention preferably cure through exposure to ultraviolet radiation and heat, preferably through heat.

In a further embodiment of the invention, the coating composition of the invention can be used in application where corrosion protection and/or cured coating flexibility and formability are required. Examples of such applications include coil coating applications, can coatings (both external and internal can coatings), car refinish, and automotive applications.

The invention is exemplified in the following Examples.

### Examples

### Example 1

A typical water-based over varnish commercialized by the Applicant under the brand name NovoShield 4718E is thoroughly mixed with 0.1%, 0.2% and 0.5% expandable microspheres with a maximum expansion to 20 micron.

The mixtures have been applied on a 33 cl aluminum beer and beverage can, provided with black, red and green ink supplied by Sun Chemical.

After thermal curing in a box oven at 200 °C for four minutes, film weights have been checked (approx. 100 mg dry). All cans show very good abrasion resistance, show matt effect with a haptic touch. All treated cans passed pasteurization (30 minutes at 82 °C) and no adhesion loss was observed.

### Example 2

A typical high solids-based retort-sterilizable over varnish commercialized by the Applicant under the brand name NovoShield 5101 is thoroughly mixed with 0.2% expandable microspheres with a maximum expansion to 20 micron.

The mixture has been applied on a 33 cl aluminum beer and beverage can, provided with black, red and green retortable ink supplied by Sun Chemical.

After thermal curing in a box oven at 200 °C for four minutes, film weights have been checked (approx. 120 mg dry). The can shows very good abrasion resistance, shows matt effect with a haptic touch. The treated can passed sterilization (60 minutes at 127 °C) and no adhesion loss was observed.

## Claims

1. A coating composition comprising a first resin and a second resin and/or an adduct of a first resin and a second resin and a polymeric particle having an average particle size of less than 50 micron, wherein the second resin and/or an adduct of a first resin and a second resin is present in an amount of at least 20 wt%, based on the total weight of the composition.

2. Composition according to claim 1 wherein the first resin is a polyol.

3. Composition of any one of claims 1 and 2 wherein the second resin is an aminoplast.

4. Composition according to any one of the preceding claims wherein the polymeric particle is a thermoplastic microsphere.

5. Composition according to any one of the preceding claims wherein the polymeric particle has an average particle size of less than 20 micron.

6. Composition according to any one of the preceding claims further comprising a solvent comprising at least one functional group and capable of reacting with the second resin.

7. Composition according to any one of the preceding claims wherein the functional group of the first resin is at least one selected from a hydroxyl and a carboxylic acid.

8. Composition according to any one of the preceding claims further comprising a lactam and/or adduct of lactam.

9. A coated substrate comprising a substrate and a cured coating composition applied to at least part of the substrate, the coating composition being in accordance with any one of the preceding claims.

10. Coated substrate according to claim 9 wherein the substrate is a metal, preferably aluminum.

11. Coated substrate according to any one of claims 9 and 10 wherein the coated substrate is a food or beverage container.

12. Process for preparing a coated substrate comprising steps of:
(a) applying the coating composition according to any one of claims 1 to 8 to a substrate; and
(b) curing the coating composition.

13. Process of claim 12 further comprising the step of shaping the coated substrate to a food or beverage container.
